# EUROPÄISCHE PATENTSCHRIFT

(11) **EP 0 769 339 B1**
(45) Veröffentlichungstag und Bekanntmachung des Hinweises auf die Patenterteilung: **12.06.2002**
(21) Anmeldenummer: 96110817.2
(22) Anmeldetag: 04.07.1996
(51) Int. Cl.: B23B 31/30

(54) **Spannwerkzeug mit Dehnhülse**
Clamping tool with expandable sleeve
Outil de serrage avec manchon extensible

(30) Priorität: 24.08.1995 DE 19531211
(43) Veröffentlichungstag der Anmeldung: 23.04.1997
(73) Patentinhaber: Fritz Schunk GmbH & Co KG Fabrik für Spann- und Greifwerkzeuge, 74348 Lauffen (DE)
(72) Erfinder: Retzbach, Thomas, 74357 Bönnigheim (DE); Michler, Gerhard, 74360 Ilsfeld (DE)
(74) Vertreter: Beetz & Partner Patentanwälte

(56) Entgegenhaltungen:
- DE-B- 1 929 659
- US-A- 4 979 853
- US-A- 5 286 042

## Beschreibung

Die Erfindung betrifft ein Spannwerkzeug zum kraftschlüssigen genauen Spannen eines Werkstückes der im Oberbegriff des Patentanspruchs 1 angegebenen Gattung, gemäß DE-B-1 929 659.

Derartige Spannwerkzeuge werden zur genau zentrierten lösbaren Befestigung eines Werkstückes oder eines Werkzeuges auf beispielsweise einer Spindel o.dgl. eingesetzt, wobei zur Erzielung der erforderlichen Spannkraft in einen Ringraum zwischen der Dehnhülse und dem Werkzeugkörper eine Druckflüssigkeit eingebracht wird, die eine radiale Dehnung oder auch Schrumpfung der elastisch begrenzt verformbaren Dehnhülse bewirkt.

Aus der DE 39 31 138 A1 ist ein Spannwerkzeug bekannt, auf dessen zylindrischem Körper eine Spannhülse sitzt, die aus Titan oder einer Titanlegierung besteht und an ihrer mit dem Werkstück in Kontakt gelangenden Oberfläche eine harte Schicht aufweist. Die Spannhülse ist mit einem endseitig angeformten Radialflansch mittels eines Gegenhalteringes an einem Ringbund des Dornkörpers fixiert. Der eigentliche Spannabschnitt der Dehnhülse umfaßt eine eingearbeitete Ringkammer, die endseitig durch Dichtungsringe gegenüber dem Dornkörper abgedichtet ist und über im Dornkörper verlaufende Kanäle mit einer Druckflüssigkeit beaufschlagt wird. Die Dehnhülse trägt außen eine Stirnverzahnung, deren Zahnspitzen gehärtet sind. Insbesondere aufgrund der verwendeten Materialien für die Dehnhülse ist diese Ausführung kostspielig, wobei die für die üblicherweise geforderten guten Rundlaufeigenschaften notwendige Feinbearbeitung der Titanhülse einen erheblichen maschinellen und personellen Aufwand erfordert.

In der DE 39 09 630 A1 ist ein Spannwerkzeug zum kraftschlüssigen und hochpräzisen Spannen von Werkstücken beschrieben, bei dem eine im Spannwerkzeug festgelegte Dehnhülse in entspanntem Zustand mit geringem Spiel beweglich in dem zu spannenden Werkstück sitzt und die nach Beaufschlagen mit einem Druckmittel eine sehr genaue und feste Fixierung des Werkstückes am Spannwerkzeug herbeiführt. Zur Erzielung einer gegenüber herkömmlichen Stahlhülsen wesentlich vergrößerten Dehnrate besteht hier die Dehnhülse aus einer sog. Formgedächtnislegierung, die im austenitischen Zustand mit reversibler spannungsinduzierbarer Änderungsmöglichkeit des Gefüges in den martensitischen Zustand betrieben wird. Das Spannen der Dehnhülse erfolgt entweder mechanisch durch ein spezielles Konusgewinde oder hydraulisch durch Einführen einer Druckflüssigkeit in einen Ringraum, der zwischen der Umfangsfläche des Spanndorns und der Innenfläche der Dehnhülse vorgesehen ist. Zum Zuführen der Druckflüssigkeit sind im Spanndorn ein zentraler Axialkanal und von diesem abzweigende Radialkanäle ausgebildet. Auch dieses Spannwerkzeug ist wegen der verwendeten Metallegierungen kostenaufwendig.

Schließlich ist aus der DE 31 16 289 A1 ein Spanndorn mit einer hydraulisch dehnbaren Spannhülse bekannt, die aus einem faserverstärkten Kunststoff besteht und endseitig über besonders geformte Stahlringe am Dornkörper festgelegt ist. In einer Zentralbohrung des Dornkörpers von begrenzter Länge sitzt eine dünnwandige Hülse, in die ein zylindrischer Stutzen eines endseitig angeschraubten Zylinderkopfes hineinragt. Ferner befindet sich im Innenraum dieser dünnwandigen Hülse ein Kolben, dessen Kolbenstange den Zylinderkopf und auch die an das Spannwerkzeug montierte Spindel durchragt und an eine äußere Betätigungsvorrichtung angeschlossen ist. Der Arbeitsraum zwischen dem Kolben und dem zylindrischen Abschnitt des Zylinderkopfes steht über Bohrungen im Dornkörper mit einer äußeren Ringkammer in Strömungsverbindung, die zwischen der Mantelfläche des Spanndorns und der Dehnhülse ausgebildet ist. In der Praxis haben sich jedoch bei der Verwendung von Dehnhülsen aus faserverstärkten Kunststoffen erhebliche Nachteile gezeigt. Zur Erzielung von akzeptablen Rundlaufeigenschaften ist es unerläßlich, die Hülsen an ihrem Außen- oder Innenmantel spanend zu bearbeiten. Dabei werden regelmäßig Verstärkungsfasern angeschnitten und/oder freigelegt, die durch Aufspleißen oder Brechen einen erheblichen Verschleiß verursachen. Ferner werden nach längeren Betriebszeiten Mikrorisse beobachtet, die u.a. auf die verschiedenen Elastizitätsmodule der verwendeten Glasfasern und des Kunstharzes sowie auch auf die problematischen Haftungsverhältnisse in den Grenzschichten zwischen Fasern und Kunststoffen zurückzuführen sind. Zur Verbesserung der Haftung der in das Kunstharz eingebetteten bruchfesten Fasern müssen zusätzliche Haftverstärker verwendet werden und insbesondere nach längeren Betriebszeiten besteht die Gefahr von Mikrorissen und einer ungenügenden Diffusionsdichtigkeit gegenüber dem verwendeten Druckmittel. Da ferner eine gleichmäßige Verteilung und eine zuverlässige Orientierung der Verstärkungsfasern im Kunststoffmaterial praktisch nicht zu erreichen ist, treten Spannungskonzentrationen auf, die letztlich Ursache für ungenügende Rundlaufgenauigkeiten sind.

Schließlich ist aus der eingangs genannten DE-B-19 29 659 ein Spannfutter zum kraftschlüssigen präzisen Spannen von dünnwandigen Werkstücken bekannt, das eine in einem Futtergehäuse lösbar montierte Dehnhülse aus einem flexiblen und schmiegsamen Kunststoffmaterial mit hoher Dichte, z.B. Polyamid oder PTFE, aufweist. Ein Druckraum zwischen der biegsamen Mantelfläche der Dehnhülse und der Wandung des Futtergehäuses wird axial von zwei Dichtungen begrenzt und ist an einer äußeren Druckmittelversorgung angeschlossen. Durch die gewünschte nachgiebige Eigenschaft des für die Dehnhülse verwendeten Kunststoffes soll dieses Material unter Betriebsdruck in Unregelmäßigkeiten in der Rundung oder der Gestalt des Werkstücks einfließen und diese ausfüllen. Damit Werkstücke mit sich über ihre Länge kontinuierlich oder stufenweise änderndem Außendurchmesser sicher eingespannt werden können, hat die bekannte zylindrische Dehnhülse eine entsprechend angepaßte Wandstärkenverteilung, d.h. einen an die unterschiedlichen Außendurchmesser des Werkstücks angepaßten Innendurchmesser.

Aufgabe der Erfindung ist es, bei einem gattungsgemäßen Spannwerkzeug die Nachteile bekannter Ausführungen zu vermeiden.

Diese Aufgabe wird erfindungsgemäß durch die im Patentanspruch 1 angegebenen Merkmale gelöst.

Die Verwendung einer bestimmten kriechfesten Kunststoffart als Dehnhülsenmaterial bewirkt, daß die bei faserverstärkten Kunststoffen auftretenden Spannungskonzentrationen und Haftungsprobleme zwischen Fasern und Kunstharz vermieden werden, wodurch eine der Hauptursachen für das Entstehen von Mikrorissen und für die unzureichenden Rundlaufeigenschaften beseitigt sind. Die erfindungsgemäß ausgebildeten Dehnhülsen sind gegenüber bekannten Ausführungen aus Stahl um ein Mehrfaches dickwandiger ausgebildet und können innerhalb bestimmter Bereiche nachgearbeitet werden. Dies bedeutet in der Praxis, daß sich der jeweilige Anwender die jeweils gewünschten Spanndurchmesser am fertigen Dorn oder auch am Spannfutter selbst anfertigen kann. Die Dehnungsrate einer erfindungsgemäß ausgebildeten Dehnhülse beträgt etwa 0,5 bis 2,0 % und liegt damit erheblich über derjenigen von den Hülsen aus Stahl oder faserverstärktem Kunstharz.

Der verwendete Kunststoff besitzt aufgrund seines minimalen Kriechverhaltens eine hohe Zeitstandfestigkeit. Seine Feuchtigkeitsaufnahme ist praktisch Null, woraus sich eine hohe Formbeständigkeit und Diffusionsdichtheit, insbesondere auch gegenüber dem Druckmedium ergibt. Weitere wesentliche Eigenschaften des verwendeten Kunststoffmaterials sind gutes Rückformvermögen beim Entspannen der Dehnhülse, hohe Warmfestigkeit bis über 100 °C, gutes Gleit- und Verschleißverhalten sowie UV-Beständigkeit und Spanbarkeit.

Von wesentlicher Bedeutung für die Erzielung der angestrebten Eigenschaften des erfindungsgemäßen Spannwerkzeuges sind die Anordnung und Abstützung der Dehnhülse im entspannten Zustand, die quasi spielfrei oder auch mit leichtem Preßsitz auf den Spanndorn bzw. in das Spannfutter geschoben und anschließend fixiert wird. Dabei erfolgt eine selbsttätige Formanpassung der Dehnhülse an den aus dem Spanndorn bzw. dem Spannfutter gebildeten Grundkörper, wobei die auf diese Weise fixierte entspannte Dehnhülse anschließend feinbearbeitet werden kann, was äußerst genaue Rundlaufeigenschaften ergibt, die gemessen auf einem Ideal-Werkstück in gespanntem Zustand bei 2 µm liegen.

Um bei dieser Anordnung eine Versorgung mit Druckmittel in dem Raum zwischen den Wandungen des Grundkörpers und der Dehnhülse zu gewährleisten, ist auf der vollen Länge des wirksamen Dehnhülsen-Abschnittes eine vorzugsweise spiralförmige Nut vorgesehen, die an einem im Grundkörper verlaufenden Druckmittelkanal angeschlossen ist und die Einleitung von Druckmitteln in den gesamten sich durch Spannen der Dehnhülse bildenden Spaltraum zwischen diesen beiden Wandungen ermöglicht.

Ein weiteres Merkmal der Erfindung ist die besondere Gestaltung der Spannkrafterzeugung, die manuell von der Werkstück-Seite des Spannwerkzeugs vorgenommen werden kann, was das sichere und hochgenaue Spannen von kleinsten Dornen mit Durchmessern von z.B. kleiner als 8 mm ermöglicht. Die Bohrung in dem hierzu verwendeten Spanndorn muß nur so groß sein, daß ein stabförmiges Betätigungswerkzeug, z.B. ein Sechskantsteckschlüssel, eingeführt werden kann, um durch eine Schraubbewegung den im hinteren breiteren Teil des Spannwerkzeuges vorgesehenen Kolben zu verschieben und einen entsprechend hohen Flüssigkeitsdruck in der vorgeordneten Kammer zu erzeugen. Die Druckflüssigkeit wird dadurch über die Kanäle in die genannte Spiralnut zwischen Grundkörper und Dehnhülse gepreßt und bewirkt eine radiale Aufweitung der Hülse auch in den zwischen den Nutgängen liegenden Bereichen, so daß ein durchgehender etwa ringzylindrischer Druckraum entsteht. Diese Betätigungsart bringt Vorteile in der Handhabung und ist eine der Voraussetzungen bei Drehmaschinen, um den Dorn in ein Backenfutter einzuspannen, wobei die Werkstückzuführung und das Festspannen von derselben Seite aus erfolgen.

Zweckmäßige Ausgestaltungen und Weiterbildungen der Erfindung sind Gegenstand der Unteransprüche.

Weitere Besonderheiten und Vorzüge der Erfindung lassen sich der folgenden Beschreibung von Ausführungsbeispielen entnehmen, die in der Zeichnung schematisch dargestellt sind. Es zeigen:
- Fig. 1: ein als Spanndorn ausgeführtes Spannwerkzeug im Axialschnitt; und
- Fig. 2: ein als Spannfutter ausgebildetes Spannwerkzeug im Axialschnitt.

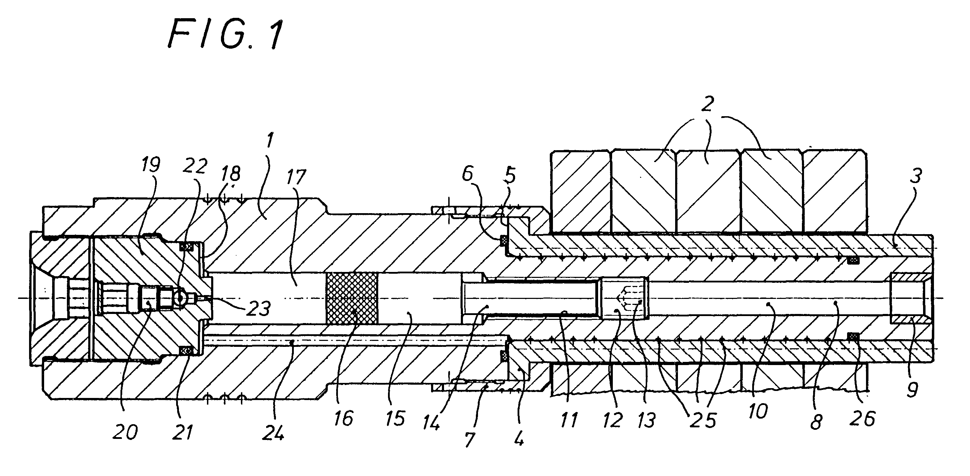

Der in Fig. 1 dargestellte Spanndorn enthält einen zylindrischen mehrstufig abgesetzten Spanndornkörper 1, auf dessen schmalerem Endabschnitt mehrere plattenförmige Werkstücke 2 mittels einer Dehnhülse 3 achszentriert und mit hoher Rundlaufgenauigkeit aufgespannt werden. Die Spannhülse 3 hat bei dieser Ausführung eine durchgehend konstante Wandstärke und besteht aus einem besonderen thermoplastischen Kunststoff, insbesondere aus linearen Polyestern, wie PET, PBT und PC sowie deren Blends und Polyblends (Polymerisat-Gemische erhöhter Schlagzähigkeit mit chloriertem Polyethylen). An einem Ende weist die Dehnhülse 3 einen Radialkragen 4 auf, der sich an einer Ringschulter 5 des Körpers 1 abstützt, wobei in der Auflagefläche ein Dichtungsring 6 angeordnet ist. Dieser Radialkragen 4 wird gegen die Ringschulter 5 und den Dichtungsring 6 mittels einer Überwurfmutter gepreßt, die auf den an die Ringschulter 5 angrenzenden Abschnitt des Dornkörpers 1 aufgeschraubt ist.

Im Dornkörper 1 ist eine durchgehende mehrfach abgesetzte Zentralbohrung 8 ausgebildet, die an dem in Fig. 1 rechten Ende eine Erweiterung zur Aufnahme einer Buchse 9 aufweist. In dem an diese Buchse 9 anschließenden glattwandigen Längenabschnitt 10 hat die Zentralbohrung 8 einen Durchmesser, der zum Einführen eines stabförmigen Sechskantschlüssels ausreicht. An diesen Längenabschnitt 10 schließt ein Gewindeabschnitt 11 an, in welchem eine Stellschraube 11 mit Außengewinde und einer Sechskant-Einstecköffnung 13 zur Aufnahme des Steckschlüssels angeordnet ist. Diese Stellschraube 12 steht mit einer Kolbenstange 14 in Wirkverbindung, deren Kolben 15 mittels einer Dichtungsanordnung 16 in einem erweiterten Abschnitt 17 der Zentralbohrung axialverschiebbar angeordnet ist. In einen nochmals erweiterten endseitigen Abschnitt der Zentralbohrung 8 ist ein Stopfen 19 mit einer zentralen Ventilanordnung 20 befestigt und durch einen Dichtungsring 21 abgedichtet. Die Ventilanordnung 20 enthält ein Kugelventil 22, das axial von ggfs. verstellbaren Stützgliedern an seinem Sitz gehalten ist und das eine zentrale Entlastungsbohrung 23 zu dem einen Druckmittelraum bildenden Abschnitt 17 der Zentralbohrung 8 sperrt.

Der Stopfen 19 ist so ausgebildet, daß zwischen seiner Stirnfläche und einer am Dornkörper 1 ausgebildeten Ringschulter ein schmaler Ringraum besteht, der einerseits mit dem Arbeitsraum 17 und andererseits mit einem achsparallel im Dornkörper verlaufenden Druckmittelkanal 22 in Strömungsverbindung steht. Dieser Druckmittelkanal 24 führt zu einer Spiralnut 25, die beim vorliegenden Ausführungsbeispiel an dem Außenmantel des die Dehnhülse 3 tragenden Abschnitts des Dornkörpers ausgearbeitet ist. Am Ende dieser Spiralnut 25 befindet sich ein Dichtungsring 26, der zusammen mit dem Dichtungsring 6 den wirksamen Spannabschnitt der Dehnhülse 3 begrenzt. Im entspannten Zustand sitzt die Dehnhülse 3 im leichten Preßsitz auf dem entsprechenden Abschnitt des Dornkörpers 1, so daß ihre Innenfläche bis auf die Spiralnuten 25 in durchgehender Druckanlage an dem Außenmantel dieses Dornkörperabschnittes anliegt.

Da das Kunststoffmaterial der Dehnhülse eine gewisse Formsteifigkeit besitzt und die Dehnhülse in ihrem entspannten Zustand durch die großflächige Druckanlage und auch durch die Einspannung ihres Ringflansches 4 auf dem zugehörigen Abschnitt des Dornkörpers 1 festgelegt ist, kann der Außenumfang der so eingespannten Dehnhülse 3 feinbearbeitet werden, um eine hochgenaue Achszentrierung und damit hervorragende Rundlaufeigenschaften zu erzielen.

Nach Einführen eines - nicht dargestellten - Sechskantschlüssels in die Ausnehmung 13 der Stellschraube 12 kann durch Verdrehen dieser Stellschraube 12 der Kolben 15 axial verschoben werden, wodurch die in dem Arbeitsraum 17 eingeschlossene Flüssigkeit über den spaltförmigen Ringraum 18 in den achsparallelen Kanal 24 und aus diesem in die Spiralnut 25 gedrückt wird. Damit erfolgt eine gleichförmige radiale Aufweitung der Dehnhülse 3 unter Ausbildung eines schmalen langgestreckten Ringraums zwischen der Innenwandung der Dehnhülse 3 und der Außenwandung des die Spiralnuten 25 enthaltenden Abschnitts des Dornkörpers 1.

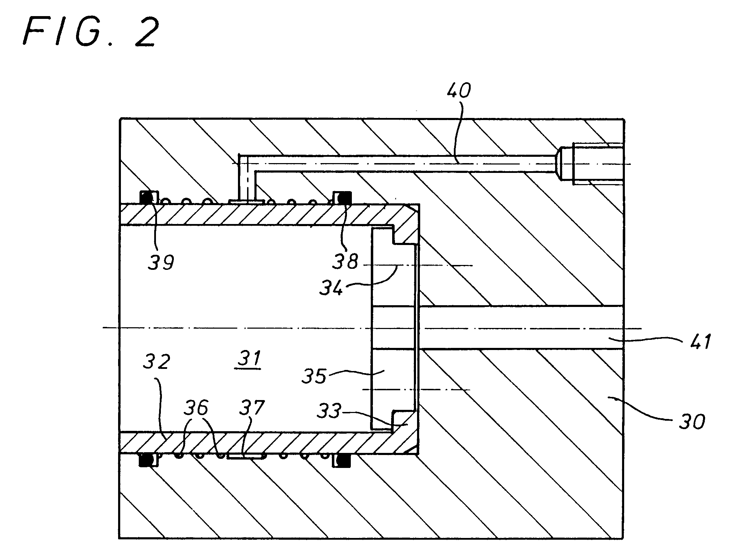

Bei dem in Fig. 2 dargestellten Spannfutter weist ein zylindrischer Grundkörper 30 eine stirnseitig offene zylindrische Ausnehmung 31 auf, in der eine erfindungsgemäße Dehn- bzw. Spannhülse 32 in leichtem Preßsitz aufgenommen ist, so daß die Außenwandung dieser Dehnhülse 32 in leichter Druckanlage an der Innenwandung der Ausnehmung 31 anliegt. Die Dehnhülse 32 besitzt einen endseitigen radial nach innen vorstehenden Kragen 33, der als Widerlager für ein am Ende der Ausnehmung 31 durch Schrauben 34 im Grundkörper 30 lösbar befestigtes Druckelement 35 dient. Die Dehnhülse 32 besteht aus dem gleichen Werkstoff wie die Dehnhülse 3 der Ausführung nach Fig. 1. In der die Ausnehmung 31 umgebenden Wandung sind Spiralnuten 36 ausgebildet, die mit einem zentralen Ringraum 37 in Strömungsverbindung stehen. Der die Nuten 36 enthaltende Längenabschnitt wird von zwei Ringdichtungen 38, 39 begrenzt. Der Ringraum 37 steht über einen im Grundkörper 30 verlaufenden Druckmittelkanal 40 mit einer äußeren - nicht dargestellten - Druckmittelversorgung in Verbindung. Ferner befindet sich im Grundkörper 30 und im Druckstück 35 eine Zentralbohrung 41.

Die Funktion bzw. Arbeitsweise des in Fig. 2 dargestellten Spannfutters entspricht derjenigen des Spanndorns gemäß Fig. 1, wobei das Spannfutter bestimmungsgemäß zur Fixierung eines in die Ausnehmung 31 eingeführten zylindrischen Bauteils dient.

Die Erfindung ist nicht auf die vorstehend beschriebenen Ausführungen und Einzelheiten beschränkt. So können statt der Spiralnuten 25 bzw. 36 auch Axial- und/oder Ringnuten vorgesehen sein. Ferner kann auf die dargestellten Ringdichtungen 6, 26 bzw. 38, 39 unter Umständen verzichtet werden, wenn die Endteile der Dehnhülse versteift und mittels einer stärkeren Schrumpfverbindung auf die entsprechenden Abschnitte des Grundkörpers 1 bzw. 30 aufgezogen werden. Darüber hinaus können die Nuten 25, 36 auch in der Wandung der Dehnhülse ausgebildet sein. Sollte der Grundkörper aus einem relativ weicheren Werkstoff, z.B. aus Aluminium oder einer Aluminiumlegierung, bestehen, dann können geeignete Zentriereinsätze zur genauen Fixierung der Dehnhülse eingesetzt werden.

Von besonderer praktischer Bedeutung ist es, daß es sich bei den erfindungsgemäßen Kunststoff-Dehnhülsen um konstruktiv einfache und preiswerte Artikel handelt, die bei Bedarf schnell und kostengünstig ausgewechselt werden können. Da die Wandstärke der erfindungsgemäßen Kunststoff-Dehnhülsen erheblich größer, und zwar bis zu dem Achtfachen größer als die herkömmlicher Dehnhülsen aus Stahl, Titan oder einer Formgedächtnislegierung ist, und da ihre Dehnungsrate erheblich über derjenigen bekannter Dehnhülsen-Ausführungen liegt, kann eine ggfs. teilverschlissene Dehnhülse vom Anwender nachgearbeitet werden. Darüber hinaus kann die erfindungsgemäße Dehnhülse auch mit einer verschleißfesten und harten Oberflächenbeschichtung versehen sein. Schließlich kann die erfindungsgemäß ausgebildete Dehnhülse einen von der Kreisform abweichenden Querschnitt

## Patentansprüche

1. Spannwerkzeug zum kraftschlüssigen präzisen Spannen eines Bauteils, z.B. eines Werkstücks, eines Werkzeugschaftes o.dgl., bestehend aus
- einem Grundkörper (1; 30),
- einer auf einem Teil des Grundkörpers (1; 30) lösbar befestigten und radial elastisch verformbaren Dehnhülse (3, 32) aus einem Kunststoffmaterial mit axial beabstandeten Dichtungen (6, 26; 38, 39), die einen Druckraum zwischen der wirksamen Mantelfläche der Dehnhülse und der gegenüberliegenden Wandung des Grundkörpers (1) abdichten, und
- einer Einrichtung zum Einleiten und Ablassen eines Druckmittels in den Druckraum,
**dadurch gekennzeichnet, daß**
- die Dehnhülse (3; 32) zumindest in ihrem radial verformbaren Teil aus einem spanbaren und kriechfesten linearen Polyestermaterial, wie PET, PBT und PC sowie deren Blends und Polyblends, besteht und eine für eine Fein- und Nachbearbeitung ihres Umfanges ausreichende Wandstärke aufweist.

2. Spannwerkzeug nach Anspruch 1, **dadurch gekennzeichnet, daß** die radialen Endabschnitte der Dehnhülse (3; 32) formsteifer als ihr radial verformbarer Teil ausgebildet sind und im druckdichten Preßsitz auf dem zugehörigen Teil des Grundkörpers (1; 30) montiert sind.

3. Spannwerkzeug nach Anspruch 1 oder 2, **dadurch gekennzeichnet, daß** die Dehnhülse (3; 32) zumindest einen Radialkragen (4; 34) zum lösbaren Befestigen am Grundkörper (1; 30) aufweist. haben, wobei die wirksame Spannfläche der inneren oder äußeren Umfangsfläche des zu spannenden Gegenstandes angepaßt ist.

4. Spannwerkzeug nach einem der Patentansprüche 1 bis 3, **dadurch gekennzeichnet, daß** zwischen den zusammenwirkenden Wandungen des radial verformbaren Teils der Dehnhülse (3; 32) und des Grundkörpers (1; 30) nutförmige Druckmittelkanäle (25; 36) vorgesehen sind, die mit der Einrichtung zum Einleiten eines Druckmittels über im Grundkörper (1; 30) verlaufende Kanäle (24; 40) in Strömungsverbindung stehen.

5. Spannwerkzeug nach einem der Patentansprüche 1 bis 4, **dadurch gekennzeichnet, daß** in dem einen Spanndorn bildenden Grundkörper (1) eine Kolben-Zylinder-Einheit (14 bis 17) zentral angeordnet ist, deren Kolben (15) über Stellglieder (12, 13) von der freien Spannseite aus manuell verschiebbar ist und deren Arbeitsraum (17) über eine endseitige Ringkammer und einen achsparallel im Grundkörper verlaufenden Kanal (24) mit dem Druckraum (25) in Strömungsverbindung steht.

6. Spannwerkzeug nach Anspruch 5, **dadurch gekennzeichnet, daß** im spindelseitigen Endteil des Grundkörpers (1) eine Ventilanordnung (19 bis 23) zum Einspeisen bzw. Ablassen des Druckmittels in den bzw. aus dem Arbeitsraum (17) angeordnet ist.

## Claims

1. A gripping tool for the frictional and precise gripping of a component such as a work piece, a tool shank or the like, which consists of a base body (1, 30), a radially and elastically deformable expanding / gripping sleeve (3, 32) with axially separated seals (6, 26, 38, 39) made from a synthetic resin and is separably fixed on a part of the base body (1,30) which seals a pressure space between the effective shell surface of the expanding / gripping sleeve and the wall of the base body (1) which is located opposite and a device for the input and output of a hydraulic fluid into the pressure space, **characterised by** the fact that at least the deformable part of the expanding / gripping sleeve (3, 32) is made from a machinable and creep-resistant linear polyester material such as PET, PBT and PC as well as their blends and poly-blends and has a wall thickness able to withstand fine and post-machining of its peripheral area

2. A gripping tool according to Claim 1, **characterised by** the fact the radial end sectors of the expanding / gripping sleeve (3, 32) are stiffer than its radially deformable portion and are assembled in a pressure proof press fit on the appropriate portion of the base body (1, 30)

3. A gripping tool according to Claim 1 or 2, **characterised by** the fact that the expanding / gripping sleeve (3, 32) has at least one radial collar (4, 34) for the separable fastening to the base body (1, 30)

4. A gripping tool according to patent Claims 1 to 3, **characterised by** the fact that between the walls of the radially deformable part of the expanding / gripping sleeve (3,32) and the base body (1, 30) there are provided groove-shaped hydraulic fluid channels (25, 36) which are flow-wise connected with the device for the input of a hydraulic fluid through the channels (24, 40) which pass through the base body (1, 30).

5. A gripping tool according to one of the patent Claims 1 to 4, **characterised by** the fact that in one of the base bodies (1) which forms the clamping spindle, a piston cylinder unit (14 to 17) is centrally arranged, whose piston (15) can be moved manually from the free gripping side over actuators (12,13) and whose working space (17) is flow-wise connected with the pressure space (25) through a one-sided ring chamber and an axially parallel channel (24) which passes through the base body.

6. A gripping tool according to Claims 5, **characterised by** the fact that in the end portion of the base body (1) on the side of the spindle is arranged a valve (19 to 23) for the movement of the hydraulic fluid into or out of the working space (17)

## Revendications

1. Outil de serrage pour le serrage précis par friction d'un élément, par exemple d'une pièce à usiner, d'une tige d'outil ou similaire, composé :
- d'un corps de base (1 ; 30) ;
- d'une douille élastique (3, 32), déformable élastiquement dans le sens radial et fixée de manière amovible sur une partie du corps de base (1 ;30), fabriquée en une matière plastique et comportant des joints situés à une certaine distance axiale (6, 26 ; 38, 39) qui rendent étanche une chambre de pression située entre la surface de la gaine active de la douille élastique et la paroi opposée du corps de base (1), et
- d'un dispositif pour amener et évacuer un fluide de pression dans la chambre de pression,
**Caractérisé en ce que**
- la douille élastique (3 ; 32) se compose au moins dans sa partie déformable radialement d'une matière en polyester linéaire résistant au fluage et à coupe rapide, comme du PET, PBT et PC ainsi que leurs mélanges et mélanges poly et présente une épaisseur de paroi suffisante pour un finissage et une reprise de son contour.

2. Outil de serrage conformément à la revendication 1, **caractérisé en ce que** les sections finales radiales de la douille élastique (3 ; 32) sont conçues pour être plus indéformable que sa partie radialement déformable et sont montées en ajustage serré, étanche à la pression, sur la partie correspondante du corps de base (1 ; 30).

3. Outil de serrage conformément à la revendication 1 ou 2, **caractérisé en ce que** la douille élastique (3 ; 32) présente au moins un collet radial (4 ; 34) pour la fixation amovible sur le corps de base (1 ; 30).

4. Outil de serrage conformément aux revendications 1 à 3, **caractérisé en ce que** des canaux pour le fluide de pression (25 ; 36) en forme de rainure, en communication de fluide avec le dispositif destiné à amener un fluide de pression par le biais des canaux (24 ; 40) s'étendant dans le corps principal (1; 30), sont prévus entre les parois coopérantes de la partie déformable radialement de la douille élastique (3 ; 32) et du corps de base (1 ; 30).

5. Outil de serrage conformément à l'une des revendications 1 à 4, **caractérisé en ce que** l'on a disposé au centre, dans le corps de base (1) formant une broche de serrage, une unité piston - cylindre (14 à 17) dont le piston (15) est déplaçable manuellement par le biais d'un élément de réglage (12, 13) depuis la face de serrage libre et dont la chambre de travail (17) est en communication de fluide avec la chambre de pression (25) par le biais d'une chambre circulaire du côté de l'extrémité et d'un canal (24) s'étendant de façon parallèle et axialement dans le corps de base.

6. Outil de serrage conformément à la revendication 5, **caractérisé en ce que** l'on a disposé dans la partie finale face à la tige du corps de base (1) un dispositif à soupape (19 à 23) destiné à amener ou évacuer un fluide de pression dans ou hors de la chambre de travail (17).
